# EUROPÄISCHE PATENTSCHRIFT

(11) **EP 1 123 175 B1**
(45) Veröffentlichungstag und Bekanntmachung des Hinweises auf die Patenterteilung: **14.05.2003**
(21) Anmeldenummer: 99969214.8
(22) Anmeldetag: 20.10.1999
(51) Int. Cl.: B23Q 1/00

(54) **GELENKWERKZEUGKOPF**
ARTICULATED TOOL HEAD
TETE D'OUTIL ARTICULE

(30) Priorität: 21.10.1998 DE 19848396; 03.11.1998 DE 19850708
(43) Veröffentlichungstag der Anmeldung: 16.08.2001
(73) Patentinhaber: DS Technologie Werkzeugmaschinenbau GmbH, 41236 Mönchengladbach (DE)
(72) Erfinder: WAHL, Joachim, D-52156 Monschau (DE)
(74) Vertreter: Rehders, Jochen
(86) Internationale Anmeldenummer: EP9907960
(87) Internationale Veröffentlichungsnummer: WO00025976

(56) Entgegenhaltungen:
- EP-A- 0 791 438
- EP-A- 0 868 964
- DE-A- 19 650 360
- DE-U- 29 803 274
- DE-U- 29 818 719
- FR-A- 2 770 432
- US-A- 4 962 676
- US-A- 5 715 729
- US-A- 6 048 143

## Beschreibung

Die Erfindung betrifft einen Gelenkwerkzeugkopf als eine Baugruppe, die Bestandteil unterschiedlicher Fräsmaschinenkonzepte sein kann und zum Verfahren in den Linearachsen X, Y, Z eingerichtet ist.

Es gibt unterschiedliche Bauarten von Fräsmaschinen mit Fräskopfeinheiten mit zwei kontinuierlich bewegbaren Achsen, beispielsweise Fräskopfeinheiten mit einem Schrägachskopf oder mit einem Gabelkopf. In der DE 34 07 679 C1 ist ein Horizontal-Bohrund Fräswerk mit einem um eine unter 45° zur Horizontalen geneigten Achse schwenkbaren Spindelkopf beschrieben, der in der horizontalen und der vertikalen Arbeitsstellung der Bohrspindelhülse mit einem Traggehäuse verriegelbar ist und bei dem die Spindelhülse über ein Kegelradgetriebe antreibbar ist.

Aus der US 3 483 796 A ist des weiteren eine Fräskopfeinheit mit einem Gabelkopf beschrieben, bei der sich der Gabelkopf um bis zu 90° schwenken und um eine dazu senkrechte Achse drehen läßt. Bei diesen bekannten Fräskopfeinheiten erfolgt der Antrieb der Frässpindel durch einen in X-, Y-, Z-Richtung verstellbaren Spindelbalken hindurch über Zwischengetriebe, die die Schwenkbarkeit des Spindelkopfes und den Antrieb in jeder Winkelstellung gewährleisten. Servomotoren bewirken die Verstellung in X-, Y- und Z-Richtung. Die Kühl-/Schmierstoff- und Energiezuführung zur Spindel erfolgt über Drehdurchführungen, und die Meßsystemsignale werden über Schleifringe übertragen. Die Gehäusebauteile bestehen in der Regel aus Stahl. Die Lagerung des Spindelbalkens erfolgt entweder hydrostatisch oder mittels Wälzlagern. Diese bekannten Fräskopfeinheiten weisen einen großen Platzbedarf, eine große Masse und Probleme bei der Dichtigkeit der Kühl-/Schmierstoffzuführung zur Spindel auf. Die Montage der bekannten Systeme ist arbeitsintensiv, die Herstellkosten sind hoch und der Wartungsaufwand erheblich.

In dem Fachbuch "Werkzeugmaschinen" von Manfred Beck, Springer-Verlag 1998, Seiten 203 bis 209, sind neuere Werkzeugmaschinenkonzepte auf Basis des HEXAPOD-Prinzips beschrieben, die auf einer Stabkinematik basieren. Eine der beschriebenen Maschinen , die den dem Anmeldungsgegenstand nächstliegenden Stand der Technik darstellt, weist sechs nicht längenveränderliche Stelzen auf, von denen jeweils zwei an einem drei Ständer aufweisenden Gestell senkrecht verfahrbar sind. Die Manipulation der Werkzeugeinheit erfolgt durch eine Verschiebung der Stabanlenkpunkte am Gestell. Die starren Stäbe sind über Kugel- und Kardangelenke in den senkrecht am Gestell verfahrbaren Antriebsschlitten, in die die Primärteile von Linearantrieben integriert sind, gelagert. Je zwei unabhängig voneinander verfahrbare Primärteile nutzen ein gemeinsames Sekundärteil. Die Anlenkpunkte der Stäbe an der Werkzeugeinheit sind so gestaltet, daß jeweils je drei Stäbe am vorderen und am hinteren Bereich der Werkzeugeinheit angreifen. Aufgrund der Anordnung der Werkzeugeinheit an drei Stabpaaren erfordert die Steuerung sechs Freiheitsgrade, obwohl für die allseitige Bearbeitung von Werkstücken mittels eines Fräskopfes nur fünf Freiheitsgrade erforderlich sind. Dementsprechend ist der Steuerungsaufwand unnötig hoch. Des weiteren ergibt sich aus der Anordnung der Werkzeugeinheit an mittels Schlitten an senkrechten Ständern verfahrbaren Stäben eine Beschränkung des möglichen Arbeitsraums. Gegenüber den klassischen Fräsmaschinenkonzepten weist das HEXAPOD-Prinzip jedoch den Vorteil einer kompakten Bauweise für die Werkzeugeinheit mit einer geringen Masse auf, so daß hohe Beschleunigungen möglich sind. Des weiteren ist durch die HEXAPOD-Bauweise eine hohe Systemsteifigkeit gegeben.

Der Erfindung liegt das Problem zugrunde, die Nachteile der bekannten Fräsmaschinenbauarten mit Fräskopfeinheiten zu vermeiden, die Vorteile des HEXAPOD-Prinzips zu nutzen und dieses dahingehend zu verbessern, daß aufgrund eines geringeren Bauteil- und Platzbedarfs, des Wegfalls zusätzlicher Getriebebauteile und Drehdurchführungen und der Verringerung der Bauteilanzahl eine Verringerung des Bauund Wartungsaufwands sowie der bewegten Massen erreicht wird, so daß höhere Beschleunigungen der angetriebenen Achsen und ein geringerer Steuerungsaufwand erreichbar sind.

Ausgehend von dieser Problemstellung wird ein Gelenkwerkzeugkopf mit einer in drei Achsen, d. h. zwei Schwenkachsen A, C und einer Linearachse Z beweglichen Werkzeugplattform, drei untereinander und zur Linearachse Z parallelen, mit festem umfangsmäßigen Abstand um die Werkzeugplattform herum angeordneten und gleichsinnig gerichteten Führungen, drei unabhängig voneinander und parallel auf den Führungen mittels Linearbewegungsantrieben für die Bewegung der Werkzeugplattform in den drei Achsen A, C, Z verfahrbaren Schlitten und drei an den Schlitten um senkrecht zur Bewegungsrichtung der Schlitten verlaufenden Achsen schwenkbar (ein Freiheitsgrad) und an der Werkzeugplattform allseits beweglich (drei Freiheitsgrade) angelenkten Lenkern vorgeschlagen.

Aufgrund der Lagerung der Werkzeugplattform an unabhängig voneinander, parallel verfahrbaren Lenkern lassen sich Direktantriebe sowohl für eine Motorspindel als auch für die Schwenkachsen und die Linearachse vorsehen, und die Leitungen für die Kühl-/Schmierstoff- und Energiezufuhr lassen sich direkt an der Werkzeugplattform oder einer Motorspindel oder an einem Frässpindelträger oder an einem Frässpindelantrieb ohne Verwendung von Drehdurchführungen anschließen.

Vorteilhafterweise kann an der Werkzeugplattform eine Motorspindel mit einer Aufnahme für einen automatisch aus einem Werkzeugmagazin einwechselbaren, um die Achse der Motorspindel gesteuert drehbaren Winkelkopf angeordnet sein. Mit derartigen Winkelköpfen lassen sich Löcher in unterschiedlichen Winkellagen bohren.

Vorzugsweise können die Linearbewegungsantriebe auf der Innenfläche eines rohrförmigen Gehäuses untereinander und zur Gehäuseachse parallel befestigt sein, wobei die Lenker als Dreieckslenker ausgebildet und mit ihren Spitzen an der Werkzeugplattform allseits beweglich und an den Linearbewegungsantrieben mit ihren Basen um senkrecht zur Bewegungsrichtung der Linearbewegungsantriebe verlaufenden Achsen schwenkbar angelenkt sein können.

Wenn das rohrförmige Gehäuse in einem Spindelbalken angeordnet oder als Spindelbalken ausgebildet ist, in Achsrichtung verfahrbar ist und der Spindelbalken an einem höhenverstellbaren, an einem Ständer geführten Schlitten angeordnet ist, wobei der Ständer und das Werkstück relativ zueinander verfahrbar sind, lassen sich sehr große Werkstücke wie mittels einer üblichen Fräsmaschine, jedoch schneller und genauer bearbeiten.

Im einzelnen können die Lenker zunächst im wesentlichen schräg radial verlaufend und dann abgeknickt etwa parallel zu den Linearbewegungsantrieben verlaufend ausgebildet sein, so daß deren Schwenkachsen an den Linearbewegungsantrieben gegenüber den Anlenkungen an der Werkzeugplattform zurückversetzt liegen.

Eine spielfreie Führung und Bewegungssteuerung der Lenker wird erreicht, wenn die Linearbewegungsantriebe durch Servomotoren bewegte Kugelrolltriebe oder lineare Direktantriebe aufweisen.

Eine CNC-Steuerung für die Linearbewegungsantriebe bewirkt das Kippen der Motorfrässpindel um die zwei Schwenkachsen sowie die Bewegung in Richtung der dritten Linearachse, und in die Linearbewegungsantriebe können Stellungsgeber für die Lenker integriert sein, die mit der CNC-Steuerung zusammenwirken.

In die Linearbewegungsantriebe lassen sich die für die Maschinensteuerung zum Messen der Drehwinkel um die Schwenkachsen sowie des Verfahrweges in Richtung der Linearachse erforderlichen Meßsysteme integrieren, entweder indem entsprechende Encoder in die jeweiligen Antriebe integriert oder die Antriebe selber als Weg- bzw. Drehwinkelgeber ausgebildet werden.

Aufgrund der Aufhängung der Werkzeugplattform an den Lenkern lassen sich die Leitungen für die Kühl-/Schmierstoff- und Energiezuführ direkt an der Werkzeugplattform ohne Verwendung von Drehdurchführungen anschließen und mit automatisch wechselbaren Motorspindeln bzw. Bearbeitungsköpfen kuppeln.

Durch die erfindungsgemäße Ausbildung des Gelenkwerkzeugkopfs mit einer Lagerung der Werkzeugplattform an unabhängig parallel in der Linearachse verfahrbaren Lenkern ergibt sich ein geringerer Platzbedarf in dieser Richtung, da keine zusätzlichen Getriebebauteile zwischen dem Gelenkwerkzeugkopf und dem Spindelbalken erforderlich sind. Hierdurch läßt sich auch die Anzahl der Bauteile verringern, und durch den Wegfall von Drehdurchführungen wird eine höhere Zuverlässigkeit und Dichtigkeit bei der Kühl-/Schmierstoff- und Energiezuführung erreicht. Wenn zusätzlich noch die Gehäuse und/oder Gehäuseteile aus einer Leichtmetallegierung, aus einer Titanlegierung und/oder aus geschäumten Metall bestehen, lassen sich die bewegten Massen noch weiter verringern, so daß sowohl höhere Beschleunigungen in X-, Y-, und Z-Richtung als auch höhere Beschleunigungen um die Schwenkachsen möglich sind, da durch die Verwendung von Servomotoren mit geringer Masse die bei den bekannten Fräskopfeinheiten vorhandenen Beschränkungen entfallen.

Die Erfindung wird nachstehend anhand eines in der Zeichnung dargestellten Ausführungsbeispiels des näheren erläutert. In der Zeichnung zeigen:

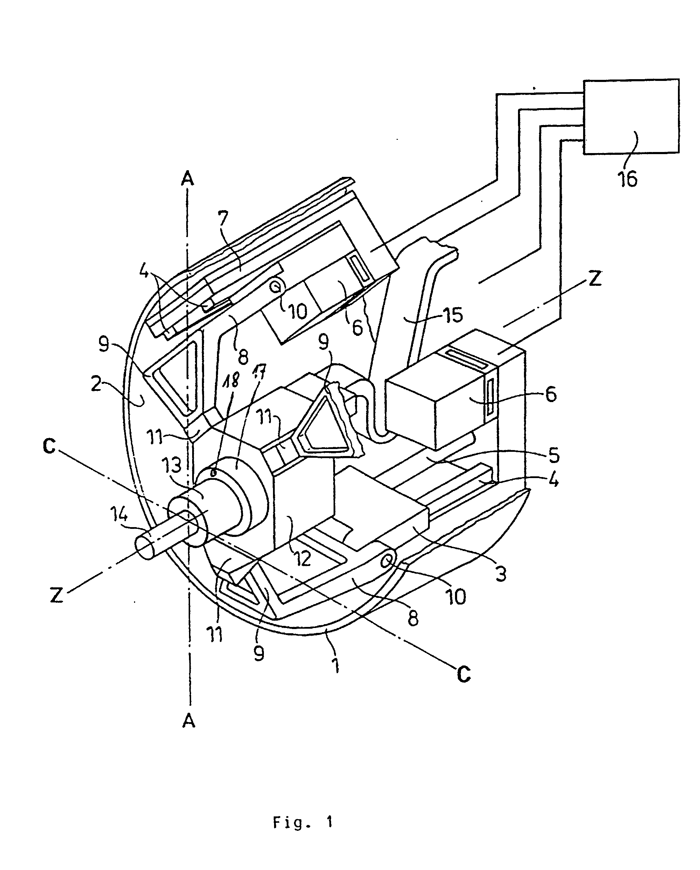

- Fig. 1: eine perspektivische, teilweise aufgebrochene Ansicht eines Gelenkwerkzeugkopfs und

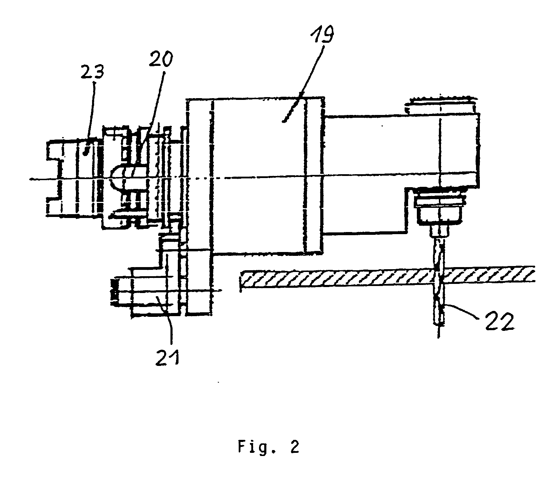

- Fig. 2: eine Seitenansicht eines an eine Motorspindel ansetzbaren Winkelkopfs.

Von einer Werkzeugmaschine ist nur der erfindungsgemäße Gelenkwerkzeugkopf perspektivisch dargestellt. Ein rohrförmiges Gehäuse 1, das in einem waagerechten oder senkrechten Spindelbalken angeordnet oder als Spindelbalken ausgebildet und in X-, Y- und Z-Richtung beweglich sein kann, trägt an seiner Innenfläche 2 drei umfangsmäßig gleichmäßig beabstandete Linearbewegungseinheiten aus Schlitten 3, die auf an Grundplatten 7 befestigten Führungen 4 mittels eines Kugelrolltriebs 5 spielfrei bewegbar sind und dafür von Servomotoren 6 angetrieben sind.

Anstelle der Kugelrolltriebe 5 und der Servomotoren 6 lassen sich auch lineare Direktantriebe verwenden.

An den Schlitten 3 sind mit einem Freiheitsgrad um Schwenkachsen 10 schwenkbare Lenker aus einem im wesentlichen in Z-Richtung verlaufenden Lenkerteil 8 und einem dazu im wesentlichen radial verlaufenden Lenkerteil 9 schwenkbar angelenkt. Die Lenker 8, 9 sind als Dreieckslenker ausgebildet, wobei die Schwenkachse 10 durch deren Basis senkrecht zur Bewegungsrichtung der Schlitten 3 und damit zur Z-Achse verläuft, während im Bereich von deren Spitze allseits bewegliche Gelenke 11 mit drei Freiheitsgraden, beispielsweise Kugelgelenke, vorgesehen sind, die mit einer Werkzeugplattform 12 verbunden sind. In die Werkzeugplattform 12 läßt sich automatisch eine Motorspindel 13 einsetzen. Die Motorspindel 13 trägt ein Fräswerkzeug 14 und ist über automatische Kupplungen und Steckverbindungen und über eine Leitung 15 mit einer CNC-Steuerung 16 verbunden, die auch die Servomotoren 6 ansteuert.

Die Servomotoren 6 können integrierte Meßsysteme, beispielsweise unabhängige Drehgeber aufweisen oder selber als Drehgeber ausgebildet sein, so daß Signale an die CNC-Steuerung gelangen, die für die jeweilige Stellung der Schlitten 3 repräsentativ sind.

Wird beispielsweise der untere Schlitten 3 allein verfahren, ergibt sich ein Schwenken der Motorfrässpindel 13 um die Achse C, die parallel zur Schwenkachse 10 verläuft. Durch gegenläufiges Verfahren der oberen Schlitten 3 ergibt sich ein Schwenken der Motorfrässpindel 13 um die auf der Achse C senkrecht stehenden Achse A, während ein gleichzeitiges Verfahren aller drei Schlitten in dieselbe Richtung ein Verfahren der Motorfrässpindel 13 in Richtung Z bewirkt. Analog lassen sich räumliche Bewegungen der Motorfrässpindel 13 in beliebige Richtungen durch entsprechendes Ansteuern der Servomotoren 6 mittels der CNC-Steuerung 16 bewirken.

Die Leitung 15 dient sowohl für die Energiezuführung zur Motorfrässpindel als auch zur Zufuhr von Kühl-/Schmierstoff und ist direkt an das Gehäuse 12 der Motorfrässpindel 13 ohne Verwendung von Drehdurchführungen angeschlossen.

An der Werkzeugplattform 12 ist eine Aufnahme 17 für einen automatisch aus einem Werkzeugmagazin einwechselbaren, um die Achse der Motorspindel 13 gesteuert drehbaren Winkelkopf 19 angeordnet, so daß der Winkelkopf 19 um die Z-Achse NC-gesteuert schwenkbar ist. Der Winkelkopf 19 dient zur Aufnahme von Bohrern 22 zum Bohren von Löchern unter unterschiedlichen Winkeln. Bei den Winkelköpfen 19 handelt es sich um Standardwinkelköpfe, die von verschiedenen Herstellern angeboten werden und die daher im einzelnen nicht beschrieben sind. Das Drehen um die Z-Achse wird durch einen Drehantrieb 21 bewirkt, dessen Drehmomentabstützung durch einen in eine Bohrung 18 in der Aufnahme 17 eingreifenden Zapfen 20 erfolgt. Das Ankoppeln des Winkelkopfs 19 an die Motorspindel 13 erfolgt über einen Standardwerkzeugkonus 23 in einer Standardwerkzeugaufnahme der Motorspindel 13.

Der erfindungsgemäße Gelenkwerkzeugkopf besteht nur aus wenigen Bauteilen, von denen die Mehrzahl identisch ist. Der Gelenkwerkzeugkopf ist sehr einfach aufgebaut und läßt sich auf einer Trägerplatte komplett, einschließlich der Ausrichtung der Linearachsen vormontieren und wird fertig justiert an der Werkzeugmaschine verschraubt. Aufgrund der geringen zu bewegenden Massen sind höchste Beschleunigungen möglich. Die Steifigkeit der Anordnung ist bei geringerer Masse ebenso hoch wie oder sogar höher als die einer herkömmlichen Fräskopfeinheit an einem Spindelbalken.

## Patentansprüche

1. Gelenkwerkzeugkopf mit
- einer in drei Achsen, d. h. zwei Schwenkachsen A, C und einer Linearachse Z, beweglichen Werkzeugplattform (12);
- drei untereinander und zur Linearachse Z parallelen, mit festem umfangsmäßigen Abstand um die Werkzeugplattform (12) angeordneten und gleichsinnig gerichteten Führungen (4);
- drei unabhängig voneinander und parallel auf den Führungen (4) mittels Linearbewegungsantrieben (5,6) für die Bewegung der Werkzeugplattform (12) in den drei Achsen A, C, Z verfahrbaren Schlitten (3) und
- drei an den Schlitten (3) um senkrecht zur Bewegungsrichtung der Schlitten (3) verlaufenden Achsen (10) schwenkbar (ein Freiheitsgrad) und an der Werkzeugplattform (12) allseits beweglich (drei Freiheitsgrade) angelenkten Lenkern (8, 9).

2. Gelenkwerkzeugkopf nach Anspruch 1, bei dem die Lenker (8, 9) als Dreieckslenker ausgebildet und mit ihren Spitzen (11) an der Werkzeugplattform (12) allseits beweglich und an den Linearbewegungsantrieben (3, 4, 5, 6, 7) mit ihren Basen um senkrecht zur Bewegungsrichtung der Linearbewegungsantriebe (3, 4, 5, 6, 7) verlaufenden Achsen (10) schwenkbar angelenkt sind.

3. Gelenkwerkzeugkopf nach Anspruch 2, bei dem die Lenker (8, 9) zunächst im wesentlichen schräg radial verlaufend und dann abgeknickt etwa parallel zu den Linearbewegungsantrieben (3, 4, 5, 6, 7) verlaufend ausgebildet sind.

4. Gelenkwerkzeugkopf nach einem der Ansprüche 1 bis 3, bei dem die Linearbewegungsantriebe (3, 4, 5, 6, 7) durch Servomotoren (6) bewegte Kugelrolltriebe (5) oder lineare Direktantriebe aufweisen.

5. Gelenkwerkzeugkopf nach einem der Ansprüche 1 bis 4, bei dem eine NC-Steuerung (16) für die Linearbewegungsantriebe (3, 4, 5, 6, 7) das Kippen der Werkzeugplattform (12) um zwei Schwenkachsen und die Linearbewegung in Richtung der dritten Linearachse bewirkt.

6. Gelenkwerkzeugkopf nach einem der Ansprüche 1 bis 5, bei dem in die Linearbewegungsantriebe (3, 4, 5, 6, 7) Stellungsgeber (6) für die Lenker (8, 9) integriert sind.

7. Gelenkwerkzeugkopf nach einem der Ansprüche 1 bis 6, bei dem an der Werkzeugplattform (12) eine Motorspindel (13) mit einer Aufnahme (17) für einen automatisch aus einem Werkzeugmagazin einwechselbaren, um die Achse der Motorspindel (13) gesteuert drehbaren Winkelkopf (19) angeordnet ist.

8. Gelenkwerkzeugkopf nach einem der Ansprüche 1 bis 7, bei dem die untereinander und zur Gehäuseachse parallelen Linearbewegungsantriebe (3, 4, 5, 6, 7) auf der Innenfläche (2) eines rohrförmigen Gehäuses (1) befestigt sind.

9. Gelenkwerkzeugkopf nach Anspruch 7 oder 8, bei dem Leitungen (15) für die Kühl-/Schmierstoff- und Energiezufuhr direkt an der Werkzeugplattform (12) ohne Verwendung von Drehdurchführungen angeschlossen sind, die mit automatisch wechselbaren Motorspindeln (13) bzw. Bearbeitungsköpfen kuppelbar sind.

10. Gelenkwerkzeugkopf nach Anspruch 8 oder 9, bei dem das rohrförmige Gehäuse (1) in einem Spindelbalken angeordnet oder als Spindelbalken ausgebildet ist, in Achsrichtung verfahrbar ist und der Spindelbalken an einem höhenverstellbaren, an einem Ständer geführten Schlitten angeordnet ist, wobei der Ständer und das Werkstück relativ zueinander verfahrbar sind.

## Claims

1. An articulated tool head comprising
- a tool platform (12) movable in three axes, i.e. two pivot axes A, C and a linear axis Z,
- three guide mechanisms (4) which are parallel to one another and to the linear axis Z and are arranged at a fixed peripheral distance around the tool platform (12) and are oriented in the same direction,
- three slides (3) movable independently of each other and parallel on the guide mechanisms (4) by means of linear movement drives (5, 6) for moving the tool platform (12) in the three axes A, C and Z, and
- three guides (8, 9) articulated to the slides (3) pivotably about pins (10) extending at right-angles to the direction of movement of the slides (3) (one degree of freedom) and to the tool platform (12) movably on all sides (three degrees of freedom).

2. An articulated tool head according to Claim 1, in which the guides (8, 9) are in the form of triangular guides and are pivotably articulated by their tips (11) to the tool platform (12) movably on all sides and to the linear movement drives (3, 4, 5, 6, 7) by their bases about pins (10) extending at right-angles to the direction of movement of the linear movement drives (3, 4, 5, 6, 7).

3. An articulated tool head according to Claim 2, in which the guides (8, 9) are designed extending first radially substantially inclined and then bent approximately parallel to the linear movement drives (3, 4, 5, 6, 7).

4. An articulated tool head according to one of Claims 1 to 3, in which the linear movement drives (3, 4, 5, 6, 7) have ball-screw drives (5) or linear direct drives moved by servomotors (6).

5. An articulated tool head according to one of Claims 1 to 4, in which a numerical control means (16) for the linear movement drives (3, 4, 5, 6, 7) effects the tilting of the tool platform (12) about two pivot axes and the linear movement in the direction of the third linear axis.

6. An articulated tool head according to one of Claims 1 to 5, in which position indicators (6) for the guides (8, 9) are integrated into the linear movement drives (3, 4, 5, 6, 7).

7. An articulated tool head according to one of Claims 1 to 6, in which a motor spindle (13) with a mount (17) for an angle head (19) which can be switched in automatically from a tool magazine and which can be rotated in controlled manner about the axis of the motor spindle (13) is arranged on the tool platform (12).

8. An articulated tool head according to one of Claims 1 to 7, in which the linear movement drives (3, 4, 5, 6, 7) which are parallel to each other and to the housing axis are fastened to the inner surface (2) of a tubular housing (1).

9. An articulated tool head according to Claim 7 or 8, in which lines (15) for supplying coolant/lubricant and power are connected directly to the tool platform (12) without using rotary transmission leadthroughs, which can be coupled to automatically changeable motor spindles (13) or machining heads.

10. An articulated tool head according to Claim 8 or 9, in which the tubular housing (1) is arranged in a spindle beam or is designed as a spindle beam, can be displaced in the axial direction and the spindle beam is arranged on a vertically adjustable slide guided on a stand, the stand and the workpiece being displaceable relative to each other.

## Revendications

1. Tête d'outil articulée comprenant
- une plate-forme d'outil (12) mobile sur trois axes, c'est-à-dire deux axes de pivotement A, C et un axe linéaire Z ;
- trois guidages (4) disposés les uns en dessous des autres, parallèles à l'axe linéaire Z, à une distance périphérique fixe autour de la plate-forme d'outil (12) et orientés selon le même sens ;
- trois chariots (3) mobiles indépendamment les uns des autres et parallèles sur les guidages (4) à l'aide d'entraînements de déplacement linéaire (5, 6) pour déplacer la plate-forme d'outil (3) dans les trois axes A, C, Z, et
- trois leviers (8, 9) articulés sur les chariots (3), pivotant (un degré de liberté) autour d'axes (10) perpendiculaires au sens dé déplacement des chariots (3) et mobiles dans tous les sens (trois degrés de liberté) sur la plate-forme d'outil (12).

2. Tête d'outil articulée selon la revendication 1, dans laquelle les leviers (8, 9) présentent une forme triangulaire et sont articulés avec leurs pointes (11) mobiles dans tous les sens sur la plate-forme d'outil (12) et, avec leurs bases, sur les entraînements de déplacement linéaire (3, 4, 5, 6, 7), pivotant autour d'axes (10) s'étendant verticalement au sens de déplacement des entraînements de déplacement linéaire (3, 4, 5, 6, 7).

3. Tête d'outil articulée selon la revendication 2, dans laquelle les leviers (8, 9) présentent d'abord une forme radiale pour l'essentiel inclinée, puis une forme pliée s'étendant sensiblement parallèlement aux entraînements de déplacement linéaire (3, 4, 5, 6, 7).

4. Tête d'outil articulée selon l'une des revendications 1 à 3, dans laquelle les entraînements de déplacement linéaire (3, 4, 5, 6, 7) présentent des entraînements à billes (5) déplacés par des servomoteurs (6) ou des entraînements directs linéaires.

5. Tête d'outil articulée selon l'une des revendications 1 à 4, dans laquelle une commande CN (16) pour les entraînements de déplacement linéaire (3, 4, 5, 6, 7) assure le basculement de la plate-forme d'outil (12) autour de deux axes de pivotement et le déplacement linéaire en direction du troisième axe linéaire.

6. Tête d'outil articulée selon l'une des revendications 1 à 5, dans laquelle dans les entraînements de déplacement linéaire (3, 4, 5, 6, 7) des capteurs de position (6) pour les leviers (8, 9) sont intégrés.

7. Tête d'outil articulée selon l'une des revendications 1 à 6, dans laquelle sur la plate-forme d'outil (12) est disposée une broche motorisée (13) comprenant un logement (17) pour une tête angulaire (19) pivotant autour de l'axe de la broche motorisée (13) et pouvant être interchangée automatiquement depuis un magasin d'outils.

8. Tête d'outil articulée selon l'une des revendications 1 à 7, dans laquelle les entraînements de déplacement linéaire (3, 4, 5, 6, 7) disposés les uns en dessous des autres et parallèlement à l'axe de carter sont fixés sur la surface intérieure (2) d'un carter tubulaire (1).

9. Tête d'outil articulée selon la revendication 7 ou 8, dans laquelle des conduites (15) pour l'amenée de réfrigérant/lubrifiant et d'énergie sont directement raccordées à la plate-forme d'outil (12) sans utiliser des passages tournants, pouvant être accouplées à des broches motorisées (13) ou à des têtes d'usinage automatiquement interchangeables.

10. Tête d'outil articulée selon la revendication 8 ou 9, dans laquelle le carter tubulaire (1) est disposé dans une barre de broche ou configuré comme barre de broche, mobile dans le sens axial, et la barre de broche étant disposée sur un chariot réglable en hauteur guidé sur un montant, le montant et la pièce à usiner étant mobiles l'un par rapport à l'autre.
